# EUROPEAN PATENT APPLICATION

(11) **EP 2 487 936 A1**
(43) Date of publication of application: **15.08.2012**
(21) Application number: 12250027.5
(22) Date of filing: 13.02.2012
(51) Int. Cl.: H04W 4/02, H04W 8/16

(54) **Methods and apparatus for location categorisation through continuous location**

(30) Priority: 11.02.2011 GB 201102477
(71) Applicant: Artilium UK Ltd, Dunfermline (GB)
(72) Inventor: Gray, Andrew, Dunfermline Fife KY11 8GR (GB); Rigden, Simon, Dunfermline Fife KY11 8GR (GB)
(74) Representative: Kinsler, Maureen Catherine

(57) **Abstract**

A system adapted to receive raw location information from a mobile device and process the raw location information to categorise the device's location into one or more user categories, such as "home" or "work". The system is adapted to provide the categorised location information, not the raw location information, to a requesting application.

## Description

### Field of invention

The present invention relates to a location system. In particular, the invention relates to a mobile telecoms location detection system that allows categories of location of a mobile device user to be provided, without revealing the true location, or identity, of the user.

### Background of the invention

Location systems typically share latitude and longitude or other coordinates. Software applications running on user devices that need location information are typically expected to interpret the coordinates. Existing location applications also require users to "check in" to a location, and therefore remember to launch them. Also, they require users to define locations on a map as "points of interest" for them. This is a manual process that is an unwelcome chore. However, without it, a location system will not meet that user's needs. These traditional systems also fail when the user is away from their usual location pattern - on a business trip for example. In these situations, for a location system to work properly a user would have to pre-configure locations for hotels, workplaces and so on.

### Summary of the invention

According to one aspect of the present invention, there is provided a computer processor-based method comprising: receiving location information from a mobile user device, such as a mobile telephone or PDA; using the location information to categorise the user's location; and providing the categorised location information to an application, in response to a request. The location information may be derived from GPS signals and /or telecommunications network cells or using any other suitable location detection technique.

By continuously monitoring the user's location, but abstracting this to be associated with a particular location, for example "at home", the user's true location can be hidden from a requesting application. Sharing an abstract interpretation of the location coordinate allows the actual location to be hidden, whilst still getting the app-oriented benefit.

The continuous location addresses are mapped into location categories. The location categories are returned when an application requests the user's location. Often it is only the category of location that is required, and by only sharing this information the calling application is in turn relieved of the concerns of storing location information that could be misused easily.

The method of the invention further involves updating a user's location categorisation information as and when new location information is received from the user's device.

The method may involve storing a list of candidate categorisations for a particular location and ranking these depending on the raw location information received. By continuously monitoring raw location information as a function of time and monitoring possible location categorisations, the location categorisation information is continuously updated so that the method is self learning and self-correcting.

The method may involve registering applications that are allowed access to a user's categorised location information. Only registered applications would be allowed access to categorised location information.

According to another aspect of the present invention, there is provided a computer processor-based method comprising: storing a client location application on a mobile device, together with a token or identifier associated with the mobile device; using the client location application to collect raw location information from the mobile user device; processing the raw location information to categorise the user's location, for example into one or more categories such as "home" or "work"; and providing the categorised location information, not the raw location information, to a requesting application.

Preferably, processing of the raw location information is done at a remote processor, for example a remote server.

According to another aspect of the present invention, there is provided a system adapted to: receive raw location information from a mobile device; and process the raw location information to categorise the device's location into one or more user categories, such as "home" or "work". The system is preferably adapted to continuously update the categorised location information based on real-time location information from the user device.

The system is adapted to provide the categorised location information, not the raw location information, to a requesting application. The system is preferably adapted to maintain a register of permissions granted by a user and to allow access to the categorised location information only in the event that user permission has been granted.

### Brief description of the drawings

Various aspects of the invention will now be described by way of example only, and with reference to the following drawings, of which:
Figure 1 is a block diagram of a location categorisation system;
Figure 2 is a diagram illustrating possible user journeys;
Figure 3 is a flow diagram of the steps in a location categorisation method;
Figure 4 is a flow diagram of a method for categorising candidates for use in the method of Figure 3, and
Figure 5 is a representation of the location of groups of people.

### Detailed description of the drawings

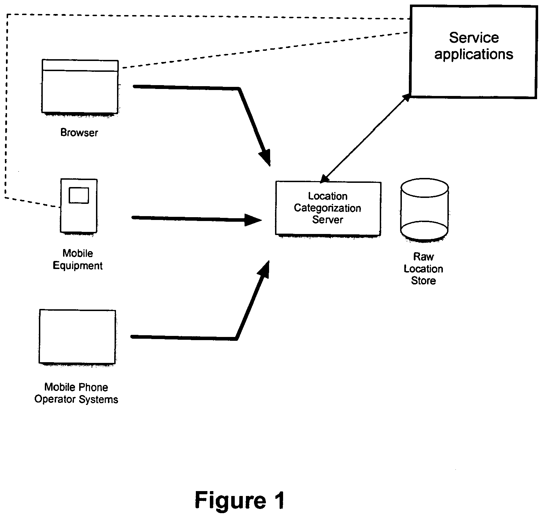

Figure 1 shows a location categorisation system. This has a location categorisation server (LCS) that is able to access and communicate with a raw location database, which stores location information. The LCS is able to communicate with mobile user devices, which will be referred to as location categorization clients (LCCs) (the clients). The clients can be any number of sources including but not limited to: mobile equipment such as phones; GPS receivers; SIM cards; web browsers; mobile phone operator network systems. Location data is delivered to the LCS by the clients. The data can be sent to the server in various formats and with varying frequency depending on battery and server capacity concerns. The raw data is stored on the raw location database ready for use by the LCS for journey and stay processing.

Associated with the LCS is one or more service applications, which can be used by the location categorisation clients. The service applications can be hosted in any suitable location and any suitable device (which may or may not be the user's own device) and may be provided by any service provider. Each service application needs location information to provide its services. To have access to the required location information, service applications have to be registered with the LCS. Location categorisation clients can subscribe to one or more of the service applications. When a location categorisation client registers with a service application a unique subscription token is generated. Clients can subscribe to multiple service applications, and so the LCS may have multiple subscription tokens for a single user. Location information for registered location categorisation clients is only made available to service applications to which the location categorisation client has subscribed.

Each client device is integrated with the server so that applications running on the device that require location information can be informed based on one feed. The applications do not have to be on the mobile equipment, they can be running anywhere as long as they have a connection to the server. Using the feed of continuous location, the system automatically profiles important locations for each user, assigning them a size and a category according to (among other things) time of day, day of week, population density inferred by, for example, mast data, and other topographical data. Once categorised, locations can be shared with other applications and other users based on this category.

To access the location categorisation service, a user has to register with the LCS. This can be done via a mobile device or a website. The user has to enter a username and password. These are sent to the LCS via an encrypted line. The LCS issues a token, which is used as an identifier for the user, and sends the user the identification token and a client location application, which is stored on the user's device. The client location application is adapted to identify the user's location by monitoring the absolute user location using, for example, cell data from the mobile/cellular network and GPS signals. Techniques for mobile device location detection are known in the art, for example as described in PCT/GB2005/001656, the contents of which are incorporated herein by reference, and so will not be described in detail.

Raw location information is sent to the LCS at regular intervals. This is sent together with the token, which is used to identify the user. The frequency at which information is sent depends on the amount of movement detected. Generally speaking, when the client location application detects no movement, it switches into a sleep mode in which little or no location information is transmitted to the LCS. When movement is detected, the client location application wakes up and sends raw location information at regular intervals. The LCS processes the raw location information to create a user profile. This will be described in more detail later. The user's client location application is adapted to allow the user to access and view their profile, before the raw location information is converted into location categories.

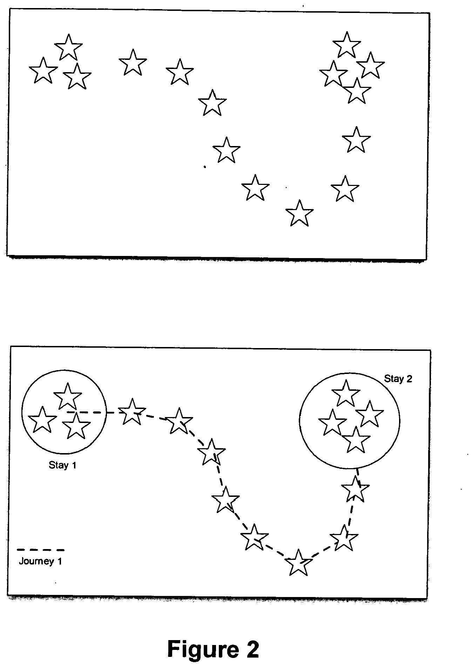

Once the user has registered, the raw location information is sent to and monitored by the LCS for a day or so. Given a set of raw locations in a day, the server classifies this information into journeys and stays. A stay is where a person remains in the same area for a significant period of time. Using continuous location data, a stay is identified by looking for a cluster of points bounded by time and by area. A journey is the travel between two stays. Both concepts are illustrated in Figure 2.

The LCS will have one or more categorized location defined for the user. The location category is actually a collection of category, location coordinate, radius, days in the week and time of day. Example categories are given in the table below:

| Category | Coordinate | Radius | Days of week | Time |
|---|---|---|---|---|
| Home | 100,100 | 200m | Mon,Tue,Wed,Thu,Fri,Sat,Sun | 20:00-08:00 |
| Home | 100,100 | 200m | Sun | 0:00-23:59 |
| Work | 200,200 | 300m | Mon,Tue,Wed,Thu,Fri | 08:30-18:30 |
| Shops | 150,200 | 800m | Thu | 20:00-21:00 |
| Shops | 700,760 | 800m | Sat | 11:00-14:00 |

In principle there can be multiple entries for the same location category. In the table above, two entries for shops might be: Thursday night grocery shopping in the first "Shops" entry, and clothes shopping in a city centre on a Saturday. Journeys can be categorized in a similar way, defining them in terms of the stays that define the beginning and end of the journey. Journey start and stop time is inferred from the stays data. Journey category is a combination of both stays categories presented in the convention for "from" then "to". For example "from home to work" describes a daily commute.

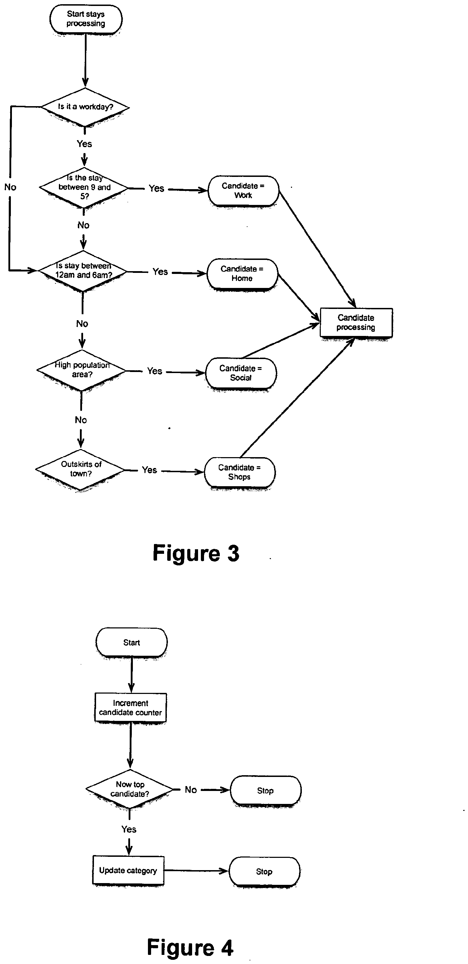

Stays are processed according to day of week, time of day, frequency of revisit, public point of interest data and population density as inferred by among other things mobile phone mast data. A simple example of stay processing is illustrated in Figure 3. This starts with the determination of whether today is a workday. If it is, the time is determined. The system then assesses whether the stay is between 9am and 5pm. If it is, the system infers that the candidate is at work. If the time is between 12am and 6am, the system infers that the candidate is at home. If it is not a workday, the time is determined and if the time is between 12am and 6am, again the system infers that the candidate is at home. If the time is not between 12am and 6am, the LCS uses the raw location information to assess whether the user is in a high population area. If yes, the system infers that user is socialising. In contrast, if the location information indicates that the user is not in a high population area, the system assesses whether the user is in the outskirts of the town. If the user is in the outskirts, it is inferred that they are shopping.

The system is self-learning and self-correcting. For example, frequency of stay helps determine work and home patterns, even for shift workers. To do this, the system identifies possible candidate categories and then tries to work out the probability that the identified category is correct. For example, the user may go into an office on a particular street one weekday between 2pm and 3pm. The initial profiling would likely indicate a candidate category for this as being "work". If, however, the user visited a shop next door to the office on a Saturday morning, this would call into question the categorisation of "work". Hence, the LCS profile would have to candidate categories, these being "work" and "shops". If the user was identified as being at the location regularly midweek between 2pm and 3pm, the LCS would infer that the most likely category of the two possible candidates is "work". Hence, by monitoring the location and time data, over significant periods, for example weeks, the LCS learns about the user's activities and consequently can adapt and correct the categorisations to ensure that they reflect reality.

Figure 4 illustrates the general process for self learning and self-correcting. This involves monitoring candidate categorisations for a given location as a function of time. In the event that the number of possible candidate categorisations is increased, the candidate count is incremented. Likewise if the number of possible candidate categorisations decreases, the candidate count is decremented. As and when raw location data is received, the LCS ranks the candidate categorisations based on a probability analysis. This analysis would take into account various factors such as day of the week, regularity of visits, time of day and duration of stays. Every time the user visits the same location, the profile is up-dated. In the event that the most likely candidate changes, the LCS ranking is updated to show the new top candidate categorisation.

In use, a calling application, i.e. one of the service applications of Figure 1, which would traditionally have to request a location coordinate itself, can request a location and be told whether the user is at a stay or on a journey with a predestination percentage (i.e. a probability that they are travelling to a certain place) with an estimated time of arrival. The request for categorised location information is sent from the service application to the LCS. Provided the calling service application is registered with the LCS and the user has subscribed to it, categorisation location information is made available. As an example, the calling applications can request location information like:
App calls "GetLocation"; Server responds "Shops"
App calls "GetLocation"; Server responds "Journey from Home to Work"
App calls "CalculatePreDestination"; Server responds "Shops, 80%"

In this way, location information can be provided to the calling application so that services can be provided to the user, without having to disclose to the calling application the identity of the user or the user's absolute location.

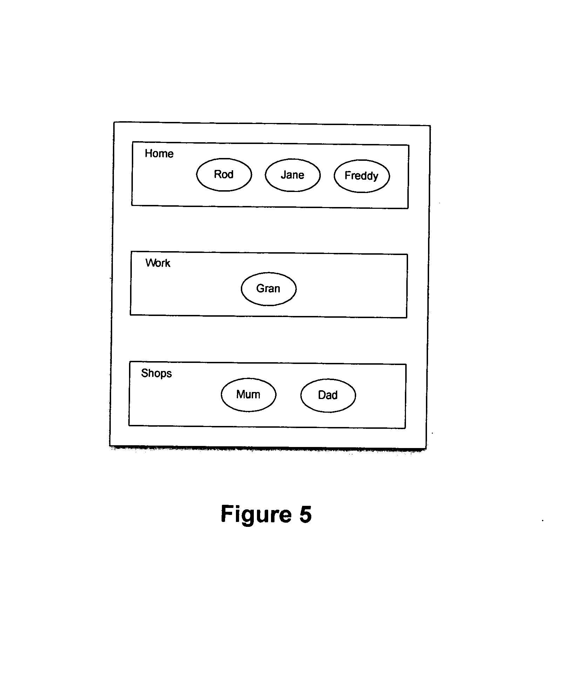

Uses for categorized location information include but are not limited to: targeting advertising based on a user's usual locations in a week. In other words, to be able to serve advertisements that are relevant either to the user's current location or where they are likely to be at the weekend; predictive location, where a user has provided no location information in a day but the LCS can still predict where the user will be based on previous location data; pre-destination reminders, where an application registers to tell the user something just before they are likely to leave or arrive at a categorized location; representing the locations of a group of people without reference to a map, as shown in Figure 5.

As will be appreciated by one of ordinary skill in the art, the present invention may be embodied as an apparatus (including, for example, a system, machine, device, computer program product, and/or the like), as a method (including, for example, a business process, computer-implemented process, and/or the like), or as any combination of the foregoing. Embodiments of the present invention are described above with reference to flowchart illustrations and a block diagram. It will be understood that blocks of the flowchart illustrations and/or block diagram, and/or combinations of blocks in the flowchart illustrations and/or block diagram, can be implemented by computer-executable program instructions (i.e., computer-executable program code). These computer-executable program instructions may be provided to a processor of a general purpose computer, special purpose computer, or other programmable data processing apparatus to produce a particular machine, such that the instructions, which execute via the processor of the computer or other programmable data processing apparatus, create a mechanism for implementing the functions/acts specified in the flowchart and/or block diagram block or blocks. As used herein, a processor may be "configured to" perform a certain function in a variety of ways, including, for example, by having one or more general-purpose circuits perform the function by executing one or more computer-executable program instructions embodied in a computer-readable medium, and/or by having one or more application-specific circuits perform the function.

These computer-executable program instructions may be stored or embodied in a computer-readable medium to form a computer program product that can direct a computer or other programmable data processing apparatus to function in a particular manner, such that the instructions stored in the computer readable memory produce an article of manufacture including instructions which implement the function/act specified in the flowchart and/or block diagram block(s).

Any combination of one or more computer-readable media/medium may be utilized. In the context of this document, a computer-readable storage medium may be any medium that can contain or store data, such as a program for use by or in connection with an instruction execution system, apparatus, or device. The computer-readable medium may be a transitory computer-readable medium or a non-transitory computer-readable medium.

A transitory computer-readable medium may be, for example, but not limited to, a propagation signal capable of carrying or otherwise communicating data, such as computer-executable program instructions. For example, a transitory computer-readable medium may include a propagated data signal with computer-executable program instructions embodied therein, for example, in base band or as part of a carrier wave. Such a propagated signal may take any of a variety of forms, including, but not limited to, electro-magnetic, optical, or any suitable combination thereof. A transitory computer-readable medium may be any computer-readable medium that can contain, store, communicate, propagate, or transport program code for use by or in connection with an instruction execution system, apparatus, or device. Program code embodied in a transitory computer-readable medium may be transmitted using any appropriate medium, including but not limited to wireless, wireline, optical fiber cable, radio frequency (RF), etc.

A non-transitory computer-readable medium may be, for example, but not limited to, a tangible electronic, magnetic, optical, electromagnetic, infrared, or semiconductor storage system, apparatus, device, or any suitable combination of the foregoing. More specific examples (a non-exhaustive list) of the non-transitory computer-readable medium would include, but is not limited to, the following: an electrical device having one or more wires, a portable computer diskette, a hard disk, a random access memory (RAM), a read-only memory (ROM), an erasable programmable read-only memory (EPROM or Flash memory), a portable compact disc read-only memory (CD-ROM), an optical storage device, a magnetic storage device, or any suitable combination of the foregoing.

It will also be understood that one or more computer-executable program instructions for carrying out operations of the present invention may include object-oriented, scripted, and/or unscripted programming languages, such as, for example, Java, Perl, Smalltalk, C++, SAS, SQL, Python, Objective C, and/or the like. In some embodiments, the one or more computer-executable program instructions for carrying out operations of embodiments of the present invention are written in conventional procedural programming languages, such as the "C" programming languages and/or similar programming languages. The computer program instructions may alternatively or additionally be written in one or more multi-paradigm programming languages, such as, for example, F#.

The computer-executable program instructions may also be loaded onto a computer or other programmable data processing apparatus to cause a series of operations or steps to be performed on the computer or other programmable apparatus to produce a computer-implemented process such that the instructions which execute on the computer or other programmable apparatus provide steps for implementing the functions/acts specified in the flowchart and/or block diagram block(s). Alternatively, computer program implemented steps or acts may be combined with operator or human implemented steps or acts in order to carry out an embodiment of the invention.

Embodiments of the present invention may take the form of an entirely hardware embodiment, an entirely software embodiment (including firmware, resident software, micro-code, etc.), or an embodiment combining software and hardware aspects that may generally be referred to herein as a "module," "application," or "system,"

A skilled person will appreciate that variations of the disclosed arrangements are possible without departing from the invention. Accordingly the above description of the specific embodiment is made by way of example only and not for the purposes of limitation. It will be clear to the skilled person that minor modifications may be made without significant changes to the operation described.

## Claims

1. A computer processor-based method comprising:
receiving location information from a mobile user device, such as a mobile telephone or PDA;
using the location information to categorise the user's location; and
providing the categorised location information to an application, in response to a request.

2. A method as claimed in claim 1 comprising receiving continuous location addresses and mapping these into location categories.

3. A method as claimed in claim 1 or claim 2 comprising updating a user's location categorisation information as and when new location information is received from the user's device.

4. A method as claimed in any of the preceding claims comprising storing a list of candidate categorisations for a particular location and ranking these depending on the raw location information received.

5. A method as claimed in any of the preceding claims comprising continuously monitoring raw location information as a function of time; monitoring possible location categorisations, and continuously updating the location categorisation.

6. A method as claimed in any of the preceding claims comprising registering applications that are allowed access to a user's categorised location information.

7. A computer processor-based method comprising: storing a client location application on a mobile device, together with a token or identifier associated with the mobile device; using the client location application to collect raw location information from the mobile user device; processing the raw location information to categorise the user's location, for example into one or more categories such as "home" or "work"; and providing the categorised location information, not the raw location information, to a requesting application.

8. A method as claimed in claim 7 comprising processing the raw location information at a remote processor.

9. A system adapted to: receive raw location information from a mobile device; and process the raw location information to categorise the device's location into one or more user categories, such as "home" or "work".

10. A system as claimed in claim 9 adapted to continuously update the categorised location information based on real-time location information from the user device.

11. A system as claimed in claim 9 or claim 10 adapted to provide the categorised location information, not the raw location information, to a requesting application.

12. A system as claimed in any of claims 9 to 11 adapted to maintain a register of permissions granted by a user and to allow access to the categorised location information only in the event that user permission has been granted.
